Europäisches Patentamt

European Patent Office

Office européen des brevets

(19)

(11) **EP 1 094 296 B1**

(12) **EUROPÄISCHE PATENTSCHRIFT**

(45) Veröffentlichungstag und Bekanntmachung des Hinweises auf die Patenterteilung:
**18.05.2005  Patentblatt 2005/20**

(51) Int Cl.$^7$: **G01B 11/06**, G01B 15/02

(21) Anmeldenummer: **00122429.4**

(22) Anmeldetag: **13.10.2000**

(54) **Verfahren und Vorrichtung zur Bestimmung des Dickenquerprofils und des Dickenlängsprofils eines laufenden Materialbandes**

Method and device for the determination of the thickness profile of a moving material band in the transversal and longitudinal direction

Procédé et dispositif pour la détermination du profil d'épaisseur à la direction transversale et longitudinale d'une bande de materiau en défilement

(84) Benannte Vertragsstaaten:
**AT BE CH DE DK ES FI FR GB GR IT LI LU NL PT SE**

(30) Priorität: **18.10.1999  DE 19950254**

(43) Veröffentlichungstag der Anmeldung:
**25.04.2001  Patentblatt 2001/17**

(73) Patentinhaber: **IMS Messsysteme GmbH**
**42579 Heiligenhaus (DE)**

(72) Erfinder: **Flormann, Paul**
**42579 Heiligenhaus (DE)**

(74) Vertreter: **COHAUSZ & FLORACK**
**Patent- und Rechtsanwälte**
**Bleichstrasse 14**
**40211 Düsseldorf (DE)**

(56) Entgegenhaltungen:
**EP-A- 0 419 115          CA-A- 1 202 431**

Anmerkung: Innerhalb von neun Monaten nach der Bekanntmachung des Hinweises auf die Erteilung des europäischen Patents  kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein Verfahren und eine Vorrichtung zur Bestimmung des Dickenquerprofils und des Dickenlängsprofils eines laufenden Materialbandes.

Im Stand der Technik sind bereits eine Vielzahl von Meßverfahren bekannt. Die Hauptaufgabe besteht jeweils darin, das Dickenquerprofil, also die Messung der Banddicke über die Bandbreite quer zur Bandlaufrichtung, und das Dickenlängsprofil, also die Messung der Banddicke in der Bandmitte oder an anderen Längspositionen längs zur Bandlaufrichtung, genau zu erfassen. Dieses Ziel kann bisher nur erfüllt werden, wenn während des Meßverfahrens simultan die Banddicke in Bandmitte, sowie die Banddicke an der jeweiligen Bandposition quer zum Band erfaßt wird.

Dieses wird bspw. durch die simultane Multikanal-Profilmessung erfüllt, bei der einerseits in der Mitte des Materialbandes eine aus mindestens einer Strahlungsquelle und mindestens einem Detektor bestehende Meßeinheit die Banddicke direkt mißt und somit das Dickenlängsprofil bestimmt. Andererseits sind separate Meßeinheiten zur Bestimmung des Dickenquerprofils vorgesehen, den den Bereich der Kanten des Materialbandes erfassen.

Aufgrund der oben genannten Anforderungen an den Umfang der zu messenden Größen und an die Meßgenauigkeit fallen die bekannten Vorrichtungen entsprechend aufwendig aus. So sind bspw. mindestens separate zwei Meßeinheiten mit je einem Meßkopf bestehend aus einer Anordnung von Strahlenquelle und mindestens einem Detektor oder eine Meßeinheit mit mehreren Meßköpfen notwendig.

Die zuvor beschrieben Verfahren und Vorrichtungen werden vorwiegend für den Strangguß, für Vorstraßen bzw. für den Einlauf von Fertigungsstaffeln gedacht. Denn die weiter fortschreitende Optimierung des Walzprozesses von Metallbändern der Fertigungsstaffeln ist ohne eine genaue Kenntnis der Zustände im Einlauf nicht mehr effektiv zu gestalten.

Der Erfindung liegt daher das technische Problem zugrunde, den technischen Aufwand der Meßvorrichtung unter Beibehalten einer genauen Bestimmung des Dickenquerprofils und des Dickenlängsprofils eines laufenden Materialbandes zu verringern.

Das zuvor aufgezeigte technische Problem wird erfindungsgemäß durch ein Verfahren gelöst,

a) bei dem mit Hilfe einer Meßeinheit in mindestens zwei Meßflecken Banddicken D bestimmt werden, wobei eine Meßeinheit mindestens eine Strahlungsquelle 8 und mindestens zwei Detektoren 10 aufweist, wobei ein Meßfleck 22 der Volumenbereich des Materialbandes 2 ist, der von der durch einen zugeordneten Detektor 22 gemessenen Strahlung durchlaufen worden ist, und wobei die Meßflecke quer zur Bandlaufrichtung beabstandet zueinander angeordnet sind,

b) bei dem die Längsposition des zu bestimmenden Dikkenlängsprofils längs zur Bandlaufrichtung festgelegt wird,

c) bei dem die Banddicke $D_0$ in der Längsposition von der Meßeinheit direkt gemessen wird und der Wert eines Korrekturwertes $\Delta K$ gleich Null gesetzt wird,

d) bei dem die Meßeinheit quer zur Bandlaufrichtung verstellt wird und die Größe der Verstellung $\Delta P$ bezogen auf die Längsposition bestimmt wird,

e) bei dem aus den in den Meßflecken bestimmten Banddicken D die Steigung k der Banddicken D quer zur Bandlaufrichtung berechnet wird,

f) bei dem der Korrekturwert $\Delta K$ als Summe aus dem bisherigen Korrekturwert $\Delta K$ und dem Produkt aus der Steigung k und der Größe der Verstellung $\Delta P$ neu berechnet wird,

g) bei dem aus den in den Meßflecken bestimmten Banddicken D die mittlere Banddicke $D_m$ berechnet wird,

h) bei dem die korrigierte Banddicke $D_{0k}$ in der Längsposition als Summe aus der Banddicke $D_m$ und dem neuen Korrekturwert $\Delta K$ berechnet wird,

i) bei dem die Schritte d) bis h) innerhalb eines Verstellzyklus iterativ wiederholt werden, bis die Meßeinheit bis zu einer maximalen Verstellung quer zur Längsposition und wieder zurück bis zu einer Position verstellt worden ist, in der die Banddicke $D_0$ in der Längsposition von der Meßeinheit direkt gemessen wird, und

j) bei dem das Dickenquerprofil aus den iterativ bestimmten Banddicken $D_m$ und das Dickenlängsprofil aus den iterativ korrigierten Banddicken $D_{0k}$ bestimmt werden.

Der zuvor beschriebene Verfahrensablauf kann auch als traversierende Mehrkanal-Profilmessung bezeichnet werden und kommt mit einer Meßeinheit für die zugrundeliegende Aufgabenstellung aus.

Befindet sich die Meßeinheit während der Dikkenquerprofilerfassung außerhalb der Längsposition, wird die Banddicke in der Längsposition gleichermaßen bestimmt, denn die Dickenänderungen, die aus dem Dickenquerprofil resultieren, werden additiv über ein mathematisches Verfahren nachgeführt. Dabei wird das Dickenquerprofil über Dickendifferenzen zur Banddicke in der Längsposition erfaßt, da die Banddicke in Bandlängsrichtung variiert. Insgesamt ist für die Genauigkeit des Verfahrens zu berücksichtigen, daß die Abweichungen zwischen der Banddicke in der Bandmitte und an der Außenkante beispielsweise im Bereich von weniger als 5 % liegen.

Somit ist mit dem erfindungsgemäßen Ablauf des Verfahrens gewährleistet, daß der technische Aufwand der Meßvorrichtung unter Beibehalten einer genauen Bestimmung des Dikkenquerprofils und des Dikkenlängsprofils eines laufenden Materialbandes verrin-

gert wird. Da das erfindungsgemäße Verfahren insbesondere im Einlaufbereich zu einer Walzstrecke angewendet wird, ist die Bandlaufgeschwindigkeit so gering, daß bei einer Travesiergeschwindigkeit im Bereich von 5-15 m/min ein ausreichend engmaschiges Vermessen des Materialbandes erfolgt.

Gemäß einer weiteren Lehre der vorliegenden Erfindung wird das oben aufgezeigte technische Problem gelöst durch eine Vorrichtung zur Bestimmung des Dickenquerprofils und des Dickenlängsprofils eines laufenden Materialbandes, mit einem Gehäuse, mit mindestens einer im Gehäuse angeordneten Strahlungsquelle und mit mindestens zwei im Gehäuse angeordneten Detektoren, die quer zur Bandlaufrichtung beabstandet zueinander angeordnet und unter unterschiedlichen Winkeln auf die mindestens eine Strahlungsquelle ausgerichtet sind, wobei das Materialband zwischen der Strahlungsquelle und den Detektoren angeordnet ist und wobei die Detektoren das Materialband quer zu dessen Bandlaufrichtung abschnittsweise erfassen, daß Verstellmittel zum synchronen Verstellen der Strahlungsquelle und der Detektoren relativ zum Materialband vorgesehen sind.

Weiterhin wird das technische Problem durch die Verwendung einer zuvor beschriebenen Vorrichtung für die Durchführung des oben beschriebenen Verfahrens gelöst.

Weitere Merkmale und Vorteile der vorliegenden Erfindung werden im Folgenden anhand von Ausführungsbeispielen näher erläutert, wobei auf die beigefügte Zeichnung Bezug genommen wird. In der Zeichnung zeigen

Fig.1 ein erstes Ausführungsbeispiel einer erfindungsgemäßen Vorrichtung in einer Seitenansicht in Bandlaufrichtung,

Fig.2 die in Fig. 1 dargestellte Vorrichtung in einer Seitenansicht quer zur Bandlaufrichtung,

Fig. 3 ein zweites Ausführungsbeispiel einer erfindungsgemäßen Vorrichtung in einer Seitenansicht in Bandlaufrichtung,

Fig. 4 eine schematische Darstellung eines Materialbandes in einer Draufsicht, die das Verstellen der Meßflecke entlang der Oberfläche des Materialbandes darstellt, und

Fig. 5 eine schematische Darstellung des Dickenquerprofils und der Positionen der Meßflecke zu verschiedenen Zeitpunkten während des Meßverfahrens.

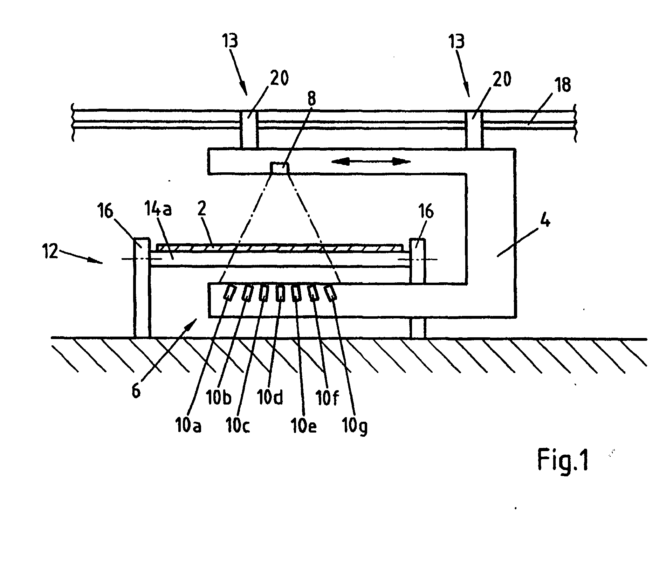

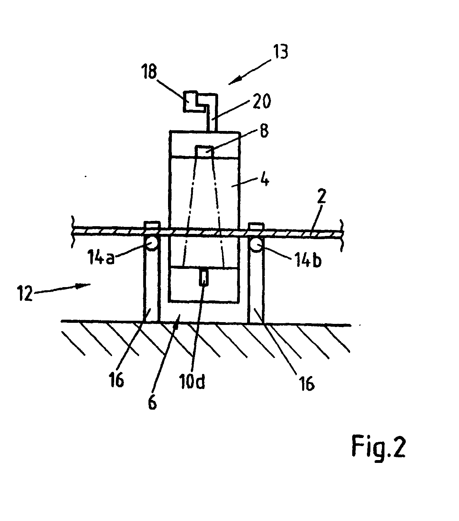

In den Fig. 1 und 2 ist ein erstes Ausführungsbeispiel einer erfindungsgemäßen Vorrichtung zur Bestimmung des Dickenquerprofils und des Dickenlängsprofils eines laufenden Materialbandes 2 dargestellt.

Die Vorrichtung weist ein Gehäuse 4, mindestens einer im Gehäuse 4 angeordneten Meßeinheit 6, die eine Strahlungsquelle 8 und sieben Detektoren 10a-10g auf. Die Detektoren 10a bis 10g sind quer zur Bandlaufrichtung beabstandet zueinander angeordnet und unter unterschiedlichen Winkeln auf die Strahlungsquelle 8 ausgerichtet. Weiterhin ist eine außerhalb der Vorrichtung angeordnete und das Materialband 2 führende Führungseinrichtung 12 vorgesehen, die das Materialband 2 zwischen der Strahlungsquelle 8 und den Detektoren 10a-10g anordnet. Die Detektoren 10a-10g erfassen somit abschnittsweise das Materialband 2 quer zu dessen Bandlaufrichtung. Des weiteren sind Verstellmittel 13 zum synchronen Verstellen der Strahlungsquelle 8 und der Detektoren 10a-10g relativ zum Materialband 2 vorgesehen.

Das Gehäuse 4 ist zweckmäßigerweise C-förmig ausgebildet, um sowohl die Strahlungsquelle 8 als auch die Detektoren 10a-10g zu tragen und gleichzeitig das Materialband 2 zu umfassen. Die Strahlungsquelle 8 sendet typischerweise hochenergetische elektromagnetische Strahlung, insbesondere Gammastrahlung oder Röntgenstrahlung aus.

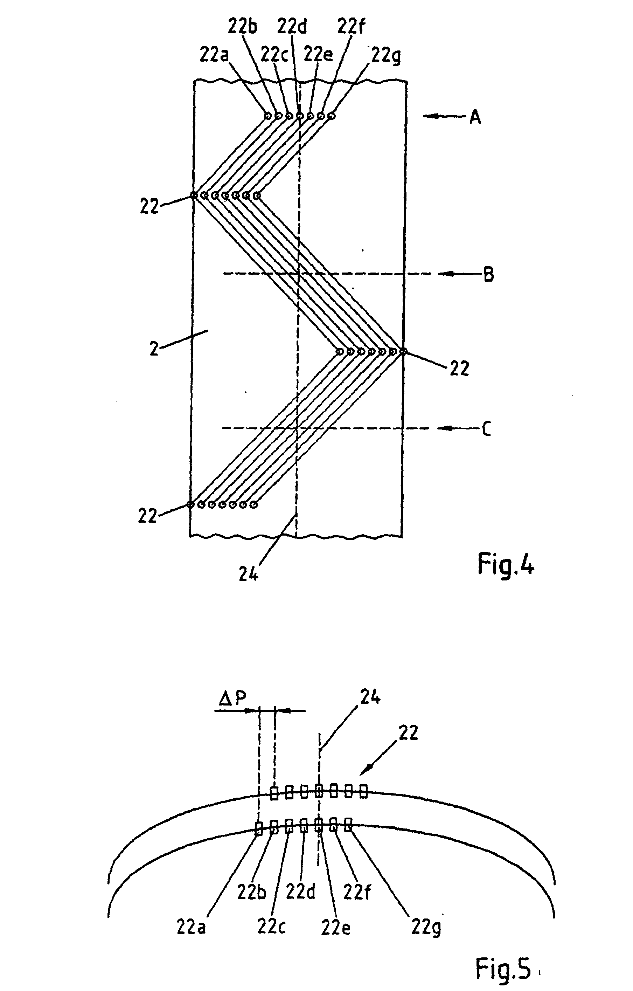

Die äußeren Detektoren 10a und 10g weisen während des Verstellens der Meßeinheit 6 das Erreichen der äußeren Kante des Materialbandes 2 nach. Siehe dazu die Fig. 4, in der das Verstellen der Meßflecke entlang der Oberfläche des Materialbandes 2 dargestellt ist.

Die Detektoren 10a-10g sind beispielsweise als Ionisationskammern, Szintillationszähler, Zählrohre oder Halbleiterdetektoren ausgebildet. Die Auswahl des Detektortypes erfolgt auf der Grundlage der verwendeten Strahlungsquelle 8 sowie deren Intensität.

Die hier beschriebene Meßeinheit 6 verfügt über sieben Detektoren 10a-10g, prinzipiell sind aber auch Meßeinheiten mit mehr oder weniger Detektoren denkbar. Die Auswahl der Anzahl von Detektoren 10 erfolgt in Abhängigkeit von der Art und der Aktivität bzw. der Dosisleistung der eingesetzten Strahlenquelle und der Art der verwendeten Detektoren im Hinblick auf die gewünschte Meßgenauigkeit inklusive des statistischen Rauschens.

Die nicht notwendigerweise zur Vorrichtung gehörende Führungseinrichtung 12 weist zwei Rollen 14a und 14b auf, die von einem Grundgestell 16 getragen werden. Dabei sind die beiden Rollen 14a und 14b zu beiden Seiten des von der Meßeinheit 6 erfaßten Bereiches angeordnet, so daß das Materialband 2 innerhalb der Vorrichtung eine definierte Position einnimmt.

Die Verstellmittel 13 ermöglichen ein zyklisches Erfassen der gesamten Breite des Materialbandes 2. Dazu sind diese so ausgebildet, daß sie die gesamte aus der Strahlungsquelle 8 und den Detektoren 10a-10g bestehende Meßeinheit 6 gegenüber dem Materialband 2 verstellen.

Wie die Fig. 1 und 2 darstellen, bewegen die Verstellmittel 13 das Gehäuse 4 mit der Strahlungsquelle 8 und den Detektoren 10a-10g relativ zum Materialband 2. Dieses ist dadurch gewährleistet, daß die Verstellmittel 13 eine lineare Führung 18 und mit dieser linearen Führung 18 in Eingriff stehende Führungsschlitten 20 aufweisen. Für das Verstellen ist weiterhin ein nicht im Detail dargestellter lineare Antrieb vorgesehen. Durch die Bewegung des gesamten Gehäuses 4 wird sichergestellt, daß die Strahlungsquelle 8 und die Detektoren 10a-10g während des Verstellens immer in einer vorjustierten Position zueinander angeordnet sind. Nachteilig ist jedoch, daß ein relativ großes Gewicht beim Verstellen bewegt werden muß.

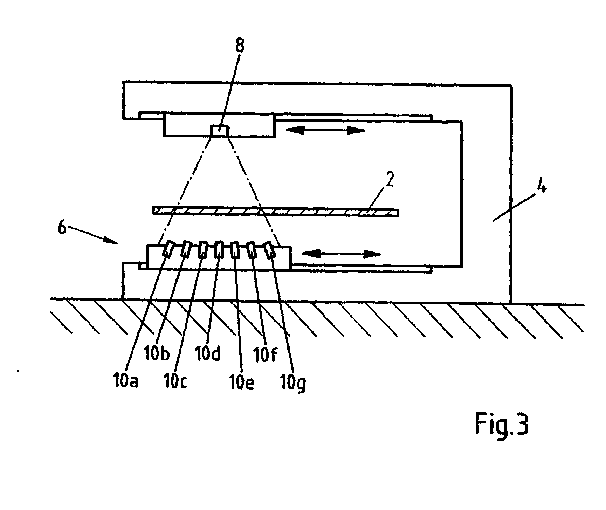

Bei dem in Fig. 3 dargestellten Ausführungsbeispiel verstellen dagegen die Verstellmittel 13 die Strahlungsquelle 8 und die Detektoren 10a-10g relativ zum Gehäuse 4, so daß eine geringere Masse bewegt werden muß. Jedoch muß während des separaten Verstellens gewährleistet werden, daß die Strahlungsquelle 8 und die Detektoren 10a-10g aufeinander ausgerichtet bleiben.

Weiterhin weisen die Verstellmittel 13 eine nicht in der Zeichnung dargestellte Meßvorrichtung zum Bestimmen der Position der Meßeinheit 13 relativ zum Materialband 2 auf. Somit können die Positionsdaten der Meßeinheit erfaßt und der im folgenden beschriebenen Auswertung der Meßdaten zugeleitet werden.

Im folgenden wird anhand der Fig. 4 und 5 das erfindungsgemäße Verfahren im Detail erläutert.

Das erfindungsgemäße Verfahren zur Bestimmung des Dickenquerprofils und des Dickenlängsprofils eines laufenden Materialbandes 2 weist die folgenden Schritte auf:

a) Mit Hilfe einer Meßeinheit 6 werden in sieben Meßflecken 22 Banddicken D bestimmt, wobei die Meßflecke 22 quer zur Bandlaufrichtung beabstandet zueinander angeordnet sind. Der Meßwert zu jedem Meßfleck wird über die Zeitdauer eines vorgegebenen Meßzyklus verarbeitet. Ein typischer Wert für einen Meßzyklus beträgt beispielsweise ca. 10 ms. Die Bestimmung der Banddicke D aus der vom Detektor 10 gemessenen Intensität erfolgt mit Hilfe des an sich bekannten Winkels des Detektors zum Materialband 2.

b) Die Längsposition 24 des zu bestimmenden Dikkenlängsprofils wird längs zur Bandlaufrichtung festgelegt. Wie die Fig. 4 und 5 zeigen, wird die Längsposition 24 in der Mitte des Materialbandes 2 angeordnet.

c) Die Banddicke $D_0$ wird an einer Ausgangsposition A in der Längsposition 24 von der Meßeinheit 6 direkt gemessen und der Wert eines Korrekturwertes $\Delta K$ wird gleich Null gesetzt. Dazu wird die Meßeinheit 6 so angeordnet, daß die Längsposition 24 innerhalb des von den Meßflecken 22a-22g erfaßten Bereiches des Materialbandes 2 angeord

net ist und die Banddicke $D_0$ wird von einem Meßfleck 22, vorzugsweise vom mittleren Meßfleck 22d direkt erfaßt. Ebenso kann die Banddicke $D_0$ durch eine Interpolation der Banddicken D der Meßflecke 22 berechnet werden.

d) Die Meßeinheit 6 wird quer zur Bandlaufrichtung für eine vorgegebene Zeitdauer $t_0$ bis $t_1$ verstellt, in den Fig.4 und 5 nach links, wobei Fig. 5 das Dikkenquerprofil und die Position der Meßeinheit 6 zu den Zeitpunkten $t_0$ und $t_1$ darstellt. Die Größe der Verstellung $\Delta P$ bezogen auf die Längsposition wird bestimmt zu $\Delta P = P(t_1)-P(t_0)$. Die Größe $\Delta P$ liegt dabei bevorzugt in der Größenordnung des Abstandes jeweils zweier Meßflecke 22, wie auch in Fig. 5 zu erkennen ist.

Die Meßeinheit 6 wird mit einer vorgegebenen Traversgeschwindigkeit quer zur Bandlaufrichtung verstellt, wobei die Traversgeschwindigkeit im Bereich der Kanten des Materialbandes 2 verringert wird. Ein typischer Wert für die Traversgeschwindigkeit beträgt beispielsweise ca. 5-15 m/min, jedoch sind auch andere Werte möglich und technisch realisierbar. Die Größe der Verstellung $\Delta P$ ergibt sich dann aus der Zeitdauer des vorgegebenen Korrekturzyklus und aus der Traversgeschwindigkeit.

e) Aus den in den Meßflecken 22 bestimmten Banddicken D wird die Steigung k der Banddicken D quer zur Bandlaufrichtung berechnet, wobei diese in bevorzugter Weise jeweils nach Ablauf des Korrekturzyklus durchgeführt wird. Diese Zeitdauer des Korrekturzyklus ist abhängig vom statistischen Rauschen der Strahlenquelle, die sich bspw. in den ermittelten Banddicken zeigt, und dient dazu das Rauschen durch Mittelwertbildung zu reduzieren.

Die Zeitdauer des Korrekturzyklus wird mindestens so lang wie die Zeitdauer eines Meßzyklus eingestellt wird, wobei vorzugsweise die Zeitdauer des Korrekturzyklus als ein Mehrfaches der Zeitdauer des Meßzyklus eingestellt wird. Ein typischer Wert für die Zeitdauer eines Korrekturzyklus, die jeweils in Abhängigkeit von den technischen Voraussetzungen gewählt wird, beträgt beispielsweise ca. 100 ms. Zur Berechnung der Steigung k wird dann ein über den Korrekturzyklus gemittelter Wert der Banddicke D jedes Meßflecks verwendet.

Mit Hilfe einer linearen Regression wird die Steigung k aus den Banddicken D und den absoluten Positionen der Meßflecke quer zur Bandlaufrichtung berechnet. Mit anderen Worten wird ein Polynom 1. Grades an den Verlauf der Banddicken angepaßt. Die Regressionsgrechnung wird bspw. nach dem Gauss-Jordan-Verfahren, der Methode der Summe der kleinsten Fehlerquadrate, durchgeführt. Die lineare Korrektur führt dabei zu guten Ergebnissen, weil die Änderungen des Dickenquer

profils über eine Verstellung der Meßeinheit von ∆P im Bereich des Abstandes zwischen jeweils zwei Meßflecken 22 gering sind und eine lineare Anpassung erlauben.

Allgemein ist es auch möglich, daß mit Hilfe von n Meßflecken 22, mit n größer als 2, und mit Hilfe einer Regressionsberechnung eines Polynoms mit dem Grad n-1 die Steigung k aus den Banddicken D und den absoluten Positionen der Meßflecke 22 quer zur Bandlaufrichtung berechnet wird. Eine höhere Rechengenauigkeit wird somit erreicht.

f) Der Korrekturwert ∆K wird nach der Formel ∆K=∆K+k×∆P neu berechnet. Dieses entspricht einer linearen Anpassung. Der Korrekturwert ∆K kann jedoch auch mit Korrekturtermen zweiten und ggf. höheren Grades berechnet werden, sofern im Schritt e) ein Polynom mit einem Grad größer als 2 angepaßt worden ist.

g) Aus den in den Meßflecken 22b-22f bestimmten Banddicken D(i), i=1-5, wird die mittlere Banddicke $D_m$, vorzugsweise als arithmetisches Mittel, berechnet. Dabei kann insbesondere die mittlere Banddicke ($D_m$) in der Mitte des von den Meßflecken umfaßten Bereiches des Materialbandes 2 berechnet werden.

h) Die korrigierte Banddicke $D_{0k}$ in der Längsposition 24 wird dann nach folgender Formel berechnet:

$$D_{0k} = \frac{\sum_{i=1}^{i=5} D(i)}{5} + \Delta K, \quad i=1-5,$$

wobei die beiden äußeren Meßflecke 22a und 22g mit den Banddicken D(0) und D(6) unberücksichtigt bleiben. Bei einem Verfahren mit einer anderen Anzahl von Meßflecken 22 ist die Formel entsprechen für andere Werte des Index i zu verwenden.

i) Die Schritte d) bis h) werden innerhalb eines Verstellzyklus iterativ wiederholt. Die Zeitdauer eines Verstellzyklus dauert so lange, bis die Meßeinheit 6 bis zu einer maximalen Verstellung quer zur Längsposition und wieder zurück bis zu einer Position verstellt worden ist, in der die Banddicke $D_0$ in der Längsposition 24 von der Meßeinheit 6 direkt gemessen wird.

Die maximale Verstellung wird bei dem in Fig. 4 dargestellten Ausführungsbeispiel relativ zur Längsposition durch den Rand des Materialbandes 2 vorgegeben, so daß im wesentlichen die gesamte Breite des Materialbandes 2 erfaßt wird. Dazu werden die beiden äußeren Meßflecke zum Erfassen der Kanten des Materialbandes 2 verwendet. Somit werden beispielsweise beim Einsatz von 7 Detektoren 10a-10g die beiden äußeren Detektoren 10a und 10g als Nachweismittel für die Kanten des Materialbandes 2 verwendet, während die Detektoren 10b-10f zur Bestimmung der Banddicke verwendet werden.

j) Das Dickenquerprofil wird dann aus den iterativ bestimmten Banddicken $D_m$ und das Dickenlängsprofil aus den iterativ korrigierten Banddicken $D_{0k}$ bestimmt.

Als Maß für eine Qualitätskontrolle also als Maß für die Genauigkeit der Korrektur des letzten Verstellzyklus für das zuvor beschriebene Verfahren kann die Differenz zwischen der im Schritt c) bestimmten Banddicke $D_0$ in der Längsposition zu Beginn des Verstellzyklus und der im Schritt i) am Ende des Verstellzyklus bestimmten korrigierten Banddicke $D_{0k}$ v verwendet werden.

Zuvor ist die Bestimmung des Dickenquerprofils zu einer Seite der Längsposition 24 beschrieben worden, indem die Meßeinheit 6 in einer Richtung von der Längsposition aus zu einer Kante des Materialbandes 2 und zurück verstellt worden ist. Dieses ist in Fig. 4 zwischen den Positionen A und B. Um alternierend die gesamte Breite des Materialbandes 2 zu erfassen wird daher die Meßeinheit 6 zur Bestimmung des Dickenquerprofils abwechselnd zu beiden Seiten quer zur Längsposition 24 verstellt, sieh dazu den Abschnitt B bis C in Fig. 4.

Ein Charakteristikum des erfindungsgemäßen Verfahrens besteht darin, daß bei der iterativen Aufsummierung des Wertes ∆K eine Fehlergenauigkeit auftritt, bis die Kante des Materialbandes 2 erreicht wird. Während des entgegengesetzten Verstellens hebt sich dieser Fehler wegen des umgekehrten Vorzeichens des Steigungswertes weitgehend wieder auf.

**Patentansprüche**

1. Verfahren zur Bestimmung des Dickenquerprofils und des Dickenlängsprofils eines laufenden Materialbandes (2),

a) bei dem mit Hilfe einer Meßeinheit (6) in mindestens zwei Meßflecken (22) Banddicken (D) bestimmt werden, wobei die Meßflecke (22) quer zur Bandlaufrichtung beabstandet zueinander angeordnet sind,
b) bei dem die Längsposition (24) des zu bestimmenden Dickenlängsprofils längs zur Bandlaufrichtung festgelegt wird,
c) bei dem die Banddicke ($D_0$) in der Längsposition (24) von der Meßeinheit (6) direkt gemessen wird und der Wert eines Korrekturwertes (∆K) gleich Null gesetzt wird,

d) bei dem die Meßeinheit (6) quer zur Bandlaufrichtung verstellt wird und die Größe der Verstellung ($\Delta$P) bezogen auf die Längsposition bestimmt wird,

e) bei dem aus den in den Meßflecken (22) bestimmten Banddicken (D) die Steigung (k) der Banddicken (D) quer zur Bandlaufrichtung berechnet wird,

f) bei dem der Korrekturwert ($\Delta$K) als Summe aus dem bisherigen Korrekturwert ($\Delta$K) und dem Produkt aus der Steigung (k) und der Größe der Verstellung ($\Delta$P) neu berechnet wird,

g) bei dem aus den in den Meßflecken (22) bestimmten Banddicken (D) die mittlere Banddicke ($D_m$) berechnet wird,

h) bei dem die korrigierte Banddicke ($D_{0k}$) in der Längsposition (24) als Summe aus der Banddicke ($D_m$) und dem neuen Korrekturwert ($\Delta$K) berechnet wird,

i) bei dem die Schritte d) bis h) innerhalb eines Verstellzyklus iterativ wiederholt werden, bis die Meßeinheit (6) bis zu einer maximalen Verstellung quer zur Längsposition und wieder zurück bis zu einer Position verstellt worden ist, in der die Banddicke ($D_0$) in der Längsposition (24) von der Meßeinheit (6) direkt gemessen wird, und

j) bei dem das Dickenquerprofil aus den iterativ bestimmten Banddicken ($D_m$) und das Dickenlängsprofil aus den iterativ korrigierten Banddicken ($D_{0k}$) bestimmt werden.

2. Verfahren nach Anspruch 1,
bei dem die Meßeinheit (6) von mindestens einem Detektor (10) pro Meßfleck (22) und mindestens einer Strahlungsquelle (8) gebildet wird.

3. Verfahren nach Anspruch 1 oder 2,
bei dem mit Hilfe der Detektoren (10) die durch das Materialband (2) abgeschwächte Intensität der Strahlung gemessen wird.

4. Verfahren nach einem der Ansprüche 1 bis 3,
bei dem eine Mehrzahl von Meßflecken (22), insbesondere fünf Meßflecke (22), vorzugsweise sieben Meßflecke (22), in einer Meßeinheit (6) verwendet werden.

5. Verfahren nach einem der Ansprüche 1 bis 4,
bei dem über die Zeitdauer eines vorgegebenen Meßzyklus der Meßwert zu jedem Meßfleck verarbeitet wird.

6. Verfahren nach einem der Ansprüche 1 bis 5,
bei dem im Schritt b) die Längsposition (24) in der Mitte des Materialbandes (2) angeordnet wird.

7. Verfahren nach einem der Ansprüche 1 bis 6, bei dem im Schritt c) die Meßeinheit (6) so angeordnet wird, daß die Längsposition (24) innerhalb des von den Meßflecken (22) erfaßten Bereiches des Materialbandes (2) angeordnet ist und die Banddicke ($D_0$) durch eine Interpolation der in den Meßflecken (22) gemessenen Banddicken (D) berechnet wird.

8. Verfahren nach einem der Ansprüche 1 bis 7, bei dem die Längsposition (24) von einem Meßfleck (22) direkt erfaßt wird.

9. Verfahren nach Anspruch 8, bei dem die Längsposition (24) vom mittleren einer ungeraden Anzahl von Meßflecken direkt erfaßt wird.

10. Verfahren nach einem der Ansprüche 1 bis 9, bei dem im Schritt d) die Meßeinheit (6) mit einer vorgegebenen Traversgeschwindigkeit quer zur Bandlaufrichtung verstellt wird.

11. Verfahren nach Anspruch 10, bei dem die Traversgeschwindigkeit im Bereich der Kanten des Materialbandes (2) verringert wird.

12. Verfahren nach Anspruch 10 oder 11, bei dem die Größe der Verstellung ($\Delta$P) aus der Zeitdauer des vorgegebenen Korrekturzyklus und aus der Traversgeschwindigkeit berechnet wird.

13. Verfahren nach einem der Ansprüche 1 bis 12, bei dem im Schritt e) die Steigung (k) der Banddicken (D) nach Ablauf des Korrekturzyklus durchgeführt wird.

14. Verfahren nach Anspruch 13, bei dem die Zeitdauer des Korrekturzyklus mindestens so lang wie die Zeitdauer eines Meßzyklus eingestellt wird.

15. Verfahren nach Anspruch 14, bei dem die Zeitdauer des Korrekturzyklus als ein Mehrfaches der Zeitdauer des Meßzyklus eingestellt wird und bei dem zur Berechnung der Steigung (k) ein über den Korrekturzyklus gemittelter Wert der Banddicke (D) jedes Meßflecks (22) verwendet wird.

16. Verfahren nach einem der Ansprüche 1 bis 15, bei dem mit Hilfe einer linearen Regression die Steigung (k) aus den Banddicken (D) und den absoluten Positionen der Meßflecke (22) quer zur Bandlaufrichtung berechnet wird.

17. Verfahren nach einem der Ansprüche 1 bis 16, bei dem mit Hilfe von n Meßflecken, mit n größer als 2, und mit Hilfe einer Regressionsberechnung eines Polynoms mit dem Grad n-1 die Steigung (k) aus den Banddicken (D) und den absoluten Positionen der Meßflecke (22) quer zur Bandlaufrichtung berechnet wird.

**18.** Verfahren nach einem der Ansprüche 1 bis 17, bei dem im Schritt f) der Korrekturwert ($\Delta K$) mit Korrekturtermen zweiten und ggf. höheren Grades berechnet wird.

**19.** Verfahren nach einem der Ansprüche 1 bis 18, bei dem im Schritt g) die mittlere Banddicke ($D_m$) als arithmetisches Mittel der Banddicken ($D$) der Meßflecke (22) berechnet wird.

**20.** Verfahren nach einem der Ansprüche 1 bis 19, bei dem die mittlere Banddicke ($D_m$) in der Mitte des von den Meßflecken (22) umfaßten Bereiches des Materialbandes (2) berechnet wird.

**21.** Verfahren nach einem der Ansprüche 1 bis 20, bei dem im Schritt i) die maximale Verstellung relativ zur Längsposition (24) durch den Rand des Materialbandes (2) vorgegeben wird.

**22.** Verfahren nach einem der Ansprüche 1 bis 21, bei dem die beiden äußeren Meßflecke (22a,22g) zum Erfassen der Kanten des Materialbandes (2) verwendet werden.

**23.** Verfahren nach einem der Ansprüche 1 bis 22, bei dem die Differenz zwischen der im Schritt c) bestimmten Banddicke ($D_0$) in der Längsposition zu Beginn des Verstellzyklus und der im Schritt i) am Ende des Verstellzyklus bestimmten korrigierten Banddicke ($D_{0k}$) als Maß für die Genauigkeit der Korrektur des letzten Verstellzyklus verwendet wird.

**24.** Verfahren nach einem der Ansprüche 1 bis 23, bei dem die Meßeinheit (6) zur Bestimmung des Dickenquerprofils abwechselnd zu beiden Seiten quer zur Längsposition (24) verstellt wird.

**25.** Vorrichtung zur Durchführung eines Verfahrens nach einem der Ansprüche 1 bis 24,

- mit einem Gehäuse (4),
- mit mindestens einer im Gehäuse (4) angeordneten Strahlungsquelle (8) und
- mit mindestens zwei im Gehäuse (4) angeordneten Detektoren (10), die quer zur Bandlaufrichtung beabstandet zueinander angeordnet und unter unterschiedlichen Winkeln auf die mindestens eine Strahlungsquelle (8) ausgerichtet sind, und
- wobei das Materialband (2) zwischen der Strahlungsquelle (8) und den Detektoren (10) angeordnet ist,
- wobei die Detektoren (10) das Materialband (2) quer zu dessen Bandlaufrichtung abschnittsweise erfassen, und wobei
- Verstellmittel (13) zum synchronen Verstellen der Strahlungsquelle (8) und der Detektoren (10) relativ zum Materialband (2) vorgesehen sind.

**26.** Vorrichtung nach Anspruch 25, wobei das Gehäuse (4) C-förmig ausgebildet ist.

**27.** Vorrichtung nach Anspruch 25 oder 26, wobei die Strahlungsquelle (8) hochenergetische elektromagnetische Strahlung, insbesondere Gammastrahlung oder Röntgenstrahlung aussendet.

**28.** Vorrichtung nach einem der Ansprüche 25 bis 27, wobei eine Mehrzahl von Detektoren (10a-10g) vorgesehen ist.

**29.** Vorrichtung nach Anspruch 28, wobei die äußeren Detektoren (10a, 10g) das Erreichen der äußeren Kante des Materialbandes (2) nachweisen.

**30.** Vorrichtung nach einem der Ansprüche 25 bis 29, wobei die Detektoren (10) als Ionisationskammern, Szintillationszähler, Zählrohre oder Halbleiterdetektoren ausgebildet sind.

**31.** Vorrichtung nach einem der Ansprüche 25 bis 30, wobei die Verstellmittel (13) ein zyklisches Erfassen der gesamten Breite des Materialbandes (2) ermöglichen.

**32.** Vorrichtung nach einem der Ansprüche 25 bis 31, wobei die Verstellmittel (13) die aus der Strahlungsquelle (8) und den Detektoren (10) bestehende Meßeinheit (6) gegenüber dem Materialband (2) verstellen.

**33.** Vorrichtung nach Anspruch 32, wobei die Verstellmittel (13) das Gehäuse (4) mit der Strahlungsquelle (8) und den Detektoren (10) relativ zum Materialband (2) verstellen.

**34.** Vorrichtung nach Anspruch 32, wobei die Verstellmittel (13) die Strahlungsquelle (8) und die Detektoren (10) relativ zum Gehäuse (4) verstellen.

**35.** Vorrichtung nach einem der Ansprüche 25 bis 34, wobei die Verstellmittel (13) mindestens eine lineare Führung (18) und einen linearen Antrieb aufweisen.

**36.** Vorrichtung nach einem der Ansprüche 25 bis 35, wobei die Verstellmittel (13) eine Meßvorrichtung zum Bestimmen der Position der Meßeinheit (6) relativ zum Materialband (2) aufweisen.

**37.** Verwendung einer Vorrichtung nach einem der Ansprüche 25 bis 36 für die Durchführung eines Verfahrens nach einem der Ansprüche 1 bis 24 .

**Claims**

1. Method for determining the transverse thickness profile and the longitudinal thickness profile of a material conveyor belt (2),

    a) in which belt thicknesses (D) are determined by means of a measuring unit (6) using at least two measurement points (22), whereby the measurement points (22) are disposed transversally to the running direction of the belt at a distance from each other,
    b) in which the longitudinal position (24) of the longitudinal thickness profile is determined longitudinally to the running direction of the belt,
    c) in which the belt thickness ($D_0$) in the longitudinal position (24) is measured directly by the measuring unit (6) and the amount of a correction value ($\Delta K$) is set at zero,
    d) in which the measuring unit (6) is adjusted transversally to the running direction of the belt and the amount of the adjustment ($\Delta P$) with respect to the longitudinal position is defined,
    e) in which the increase (k) in the belt thickness (D) transversally to the running direction of the belt is calculated from the belt thicknesses (D) determined at the measurement points (22),
    f) in which the correction value ($\Delta K$) is recalculated as the sum of the former correction value ($\Delta K$) and the product of the increase (k) and the amount of the adjustment ($\Delta P$),
    g) in which the average belt thickness ($D_m$) is calculated from the belt thickness (D) determined at the measurement points (22),
    h) in which the corrected belt thicknesses ($D_{0k}$) in the longitudinal position (24) is calculated as the sum of the belt thickness ($D_m$) and the new correction value ($\Delta K$),
    i) in which steps d) to h) are repeated iteratively within an adjustment cycle until the measuring unit (6) has been adjusted to a maximum adjustment transversally to the longitudinal position and back again to a position in which the belt thickness (Do) is measured directly in the longitudinal position (24) of the measuring unit (6), and
    j) in which the transverse thickness profile is determined from the iteratively determined belt thickness ($D_m$) and the longitudinal thickness profile is determined from the iteratively corrected belt thicknesses ($D_{0k}$).

2. Method according to claim 2, in which the measuring unit (6) is formed by at least one detector (1) per measurement point (22) and at least one radiation source (8).

3. Method according to claim 1 or 2, in which the intensity of the radiation, diminished by the material belt (2), is measured using the detectors (10).

4. Method according to one of claims 1 to 3, in which a multiplicity of measurement points (22), namely five measurement points (22), preferably seven measurement points (22), are used in a measuring unit (6).

5. Method according to one of claims 1 to 4, in which the measurement value at each measurement point is processed over the duration of a specified measurement cycle

6. Method according to one of claims 1 to 5, in which in step b) the longitudinal position (24) is disposed in the centre of the material conveyor belt (2).

7. Method according to one of claims 1 to 6, in which in step c) the measuring unit (6) is disposed in such a way that the longitudinal position (24) is disposed within the area of the material conveyor belt (2) detected by the measurement points (22) and the belt thickness ($D_0$) is calculated by an interpolation of the belt thicknesses (D) measured at the measurement points (22).

8. Method according to one of claims 1 to 7, in which the longitudinal position (24) of a measurement point (22) is directly detected.

9. Method according to claim 8, in which the longitudinal position (24) of the middle point of an odd number of measurement points (22) is detected directly.

10. Method according to one of claims 1 to 9, in which in step d) the measuring unit (6) is adjusted at a predefined traverse rate transversally to the running direction of the belt.

11. Method according to claim 10, in which the traverse rate is reduced in the area of the edges of the material conveyor belt (2).

12. Method according to claim 10 or 11, in which the amount of the adjustment ($\Delta P$) is calculated from the period of the predefined correction cycle and from the traverse rate.

13. Method according to one of claims 1 to 12, in which in step e) the increase (k) in the belt thickness (D) is conducted after completion of the correction cycle.

14. Method according to claim 13, in which the period of the correction cycle is set to be at least as long as the period of a measurement cycle.

15. Method according to claim 14, in which the period of the correction cycle is set as a multiple of the period of the measurement cycle and in which a value of the belt thickness (D) of each measurement point (22) averaged over the correction cycle is used to calculate the increase (k).

16. Method according to one of claims 1 to 15, in which the increase (k) is calculated from the belt thicknesses (D) and the absolute positions of the measurement points (22) transversally to the running direction of the belt are calculated using a linear regression.

17. Method according to one of claims 1 to 16, in which the increase (k) is calculated from the belt thicknesses (D) and the absolute positions of the measurement points (22) transversally to the running direction of the belt are calculated, using n measurement points where n is greater than 2, and using a regression calculation of a polynomial with the degree n-1.

18. Method according to one of claims 1 to 17 in which in step f) the correction value ($\Delta K$) is calculated with correction terms of a second and if necessary higher degree.

19. Method according to one of claims 1 to 18, in which in step g) the average belt thickness ($D_m$) is calculated as the arithmetical average of the belt thicknesses (D) of the measurement points (22).

20. Method according to one of claims 1 to 19, in which the average belt thickness ($D_m$) is calculated in the centre of the area of the material conveyor belt (2) encompassed by the measurement points (22).

21. Method according to one of claims 1 to 20, in which in step i) the maximum adjustment relative to the longitudinal position (24) is predefined by the edge of the material conveyor belt (2).

22. Method according to one of claims 1 to 21, in which both outer measurement points (22a,22g) are used to detect the edges of the material conveyor belt (2).

23. Method according to one of claims 1 to 22, in which the difference between the belt thickness ($D_0$) in the longitudinal position determined in step c) at the start of the adjustment cycle and the corrected belt thickness ($D_{0k}$) determined in step i) at the end of the adjustment cycle is used as the yardstick for the accuracy of the correction of the last adjustment cycle.

24. Method according to one of claims 1 to 23, in which the measuring unit (6) is adjusted on each side in turn to determine the longitudinal thickness profile transversally to the longitudinal position (24).

25. Device for the implementation of a method according to one of claims 1 to 24,

- with a housing (4),
- with at least one radiation source (8) disposed in the housing (4) and
- with at least two detectors disposed in the housing (4), which are disposed transversally to the running direction of the belt at a distance from each other, and are aligned at different angles to the at least one radiation source (8), and
- in which the material conveyor belt (2) is disposed between the radiation source (8) and the detectors,
- in which the detectors (10) detect the material conveyor belt (2) transversally to the running direction thereof in sections, and in which
- means of adjustment (13) for the synchronous adjustment of the radiation source (8) and of the detectors (10) relative to the material conveyor belt (2) are provided.

26. Device according to claim 25, in which the housing (4) is C-shaped in form.

27. Device according to claim 25 or 26, in which the radiation source (8) emits high-energy electromagnetic radiation, in particular gamma radiation or X-ray radiation.

28. Device according to one of claims 25 to 27, in which a multiplicity of detectors (10a-10g) is provided.

29. Device according to claim 28, in which the outer detectors (10a, 10g) confirm the reaching of the outer edge of the material conveyor belt (2).

30. Device according to one of claims 25 to 29, in which the detectors (10) are designed as ionisation chambers, scintillation counters, counting tubes or semiconductor detectors.

31. Device according to one of claims 25 to 30, in which the adjustment means (13) enable a cyclical detection of the entire width of the material conveyor belt (2).

32. Device according to one of claims 25 to 31, in which the adjustment means (13) displace the measuring unit (6) consisting of the radiation source (8) and the detectors (10) with respect to the material conveyor belt (2).

**33.** Device according to claim 32, in which the adjustment means (13) adjust the housing (4) with the radiation source (8) and the detectors (10) relative to the material conveyor belt (2).

**34.** Device according to claim 32, in which the adjustment means (13) adjust the radiation source (8) and the detectors (10) relative to the housing (4).

**35.** Device according to one of claims 25 to 34, in which the adjustment means (13) have at least one linear guide (18) and one linear drive.

**36.** Device according to one of claims 25 to 35, in which the adjustment means (13) have a measurement device to determine the position of the measuring unit (6) relative to the material conveyor belt (2).

**37.** Application of a device according to one of claims 25 to 36 to implement a method according to one of claims 1 to 24.


**Revendications**

**1.** Procédé pour la détermination du profil d'épaisseur en direction transversale et du profil d'épaisseur en direction longitudinale d'une bande de matériau (2) en défilement,

a) dans lequel à l'aide d'une unité de mesure (6), en au moins deux zones de mesure (22), on détermine des épaisseurs de bande (D), sachant que les zones de mesure (22) sont disposées à distance les uns des autres, transversalement par rapport à la direction de défilement de la bande,

b) dans lequel la position longitudinale (24) du profil d'épaisseur en direction longitudinale devant être déterminé est fixée longitudinalement par rapport à la direction de défilement de la bande,

c) dans lequel l'épaisseur de bande $(D_0)$ à la position longitudinale (24) est mesurée directement par l'unité de mesure (6) et la valeur de correction $(\Delta K)$ est posée comme étant égale à zéro,

d) pour lequel l'unité de mesure (6) est manoeuvrée transversalement par rapport à la direction de défilement de la bande et la valeur du déplacement de manoeuvre $(\Delta P)$, par rapport à la position longitudinale, est déterminée,

e) dans lequel, à partir des épaisseurs de bande (D) déterminées aux zones de mesure (22), on calcule la pente d'évolution (k) des épaisseurs de bande (D), transversalement par rapport à la direction de défilement de la bande,

f) dans lequel la valeur de correction $(\Delta K)$ est l'objet d'un nouveau calcul, comme étant la somme de la valeur de correction $(\Delta K)$, que l'on avait jusqu'ici, et du produit formé de la pente d'évolution (k) et de la valeur du déplacement de manoeuvre $(\Delta P)$,

g) dans lequel, à partir des épaisseurs de bande (D) déterminées aux zones de mesure (22), on calcule l'épaisseur de bande moyenne $(D_m)$,

h) dans lequel l'épaisseur de bande $(D_{ok})$ corrigée à la position longitudinale (24) est calculée comme étant la somme de l'épaisseur de bande $(D_m)$ et de la nouvelle valeur de correction $(\Delta K)$,

i) dans lequel les étapes d) à h) sont répétées de façon itérative dans le cadre d'un cycle de manoeuvre, jusqu'à ce que l'unité de mesure (6) ait été manoeuvrée jusqu'à un déplacement de manoeuvre maximal, transversalement par rapport à la position longitudinale et retour à une position, à laquelle l'épaisseur de bande $(D_0)$ en position longitudinale (24) est mesurée directement par l'unité de mesure (6), et

j) pour lequel le profil d'épaisseur en direction transversale est déterminé à partir des épaisseurs de bande $(D_m)$ déterminées de façon itérative et le profil d'épaisseur en direction longitudinale est déterminé à partir des épaisseurs de bande $(D_{ok})$ corrigées de façon itérative.

**2.** Procédé selon la revendication 1, dans lequel l'unité de mesure (6) est formée par au moins un détecteur (10) par zone de mesure (22) et au moins une source de rayonnement (8).

**3.** Procédé selon la revendication 1 ou 2, dans lequel, à l'aide des détecteurs (10), on mesure l'intensité du rayonnement ayant été affaiblie par la bande de matériau (2).

**4.** Procédé selon l'une des revendications 1 à 3, dans lequel une pluralité de zones de mesure (22), en particulier cinq zones de mesure (22), de préférence sept zones de mesure (22), sont utilisées dans une unité de mesure (6).

**5.** Procédé selon l'une des revendications 1 à 4, dans lequel, sur la durée d'un cycle de mesure prédéterminé, on traite la valeur de mesure à chaque zone de mesure.

**6.** Procédé selon l'une des revendications 1 à 5, dans lequel, à l'étape b), la position longitudinale (24) est disposée au centre de la bande de matériau (2).

**7.** Procédé selon l'une des revendications 1 à 6, dans lequel, à l'étape c), on dispose l'unité de mesure (6) de manière que la position longitudinale (24) soit disposée à l'intérieur de la zone, englobée par les zones de mesure (22), de la bande de matériau (2), et l'épaisseur de bande ($D_0$) est calculée par une interpolation des épaisseurs de bande (D) ayant été mesurées aux zones de mesure (22).

8. Procédé selon l'une des revendications 1 à 7, dans lequel la position longitudinale (24) est englobée directement par une zone de mesure (22).

9. Procédé selon la revendication 8, dans lequel la position longitudinale (24) est détectée directement par une pluralité, en nombre impair, de zones de mesure.

10. Procédé selon l'une des revendications 1 à 9, dans lequel, à l'étape d), l'unité de mesure (6) est manoeuvrée transversalement par rapport à la direction de défilement de la bande, à une vitesse transverse prédéterminée.

11. Procédé selon la revendication 10, dans lequel la vitesse transverse est diminuée dans la zone des bords de la bande de matériau (2).

12. Procédé selon la revendication 10 ou 11, dans lequel l'ampleur de la manoeuvre ($\Delta P$) est calculée à partir de la durée du cycle de correction prédéterminé et à partir de la vitesse transverse.

13. Procédé selon l'une des revendications 1 à 13, dans lequel, à l'étape e), on détermine la pente d'évolution (k) des épaisseurs de bande (D) après avoir accompli le cycle de correction.

14. Procédé selon la revendication 13, dans lequel la durée du cycle de correction est réglée à une valeur d'au moins la durée d'un cycle de mesure.

15. Procédé selon la revendication 14, dans lequel la durée du cycle de correction est réglée en tant que multiple de la durée du cycle de mesure et pour lequel, pour calculer la pente d'évolution (k), on utilise une valeur, dont on a formé la moyenne sur la valeur d'un cycle de correction, de l'épaisseur de bande (D) de chaque zone de mesure (22).

16. Procédé selon l'une des revendications 1 à 15, pour lequel, à l'aide d'une régression linéaire, on calcule la pente d'évolution (k) à partir des épaisseurs de bande (D) et des positions absolues de la zone de mesure (22), transversalement par rapport à la direction de défilement de la bande.

17. Procédé selon l'une des revendications 1 à 16, dans lequel, à l'aide de n zones de mesure, n étant supérieur à 2, et à l'aide d'un calcul de régression d'un polynôme de degré n-1, on calcule la pente d'évolution (k) à partir des épaisseurs de bande (D) et des positions absolues de la zone de mesure (22), transversalement par rapport à la direction de défilement de la bande.

18. Procédé selon l'une des revendications 1 à 17, pour lequel à l'étape f), on calcule la valeur de correction ($\Delta K$) avec des termes de correction du deuxième degré et, le cas échéant, d'un degré supérieur.

19. Procédé selon l'une des revendications 1 à 18, dans lequel, à l'étape g), on calcule l'épaisseur de bande ($D_m$) moyenne, en tant que moyenne arithmétique des épaisseurs de bande (D) de la zone de mesure (22).

20. Procédé selon l'une des revendications 1 à 19, pour lequel l'épaisseur de bande moyenne ($D_m$) est calculée au centre de la zone de bande de matériau (2) entourée par les zones de mesure (22).

21. Procédé selon l'une des revendications 1 à 20, dans lequel, à l'étape i), on prédétermine l'ampleur de manoeuvre maximale par rapport à la position longitudinale (24), en se référant au bord de la bande de matériau (2).

22. Procédé selon l'une des revendications 1 à 21, pour lequel les deux zones de mesure extérieures (22a, 22g) sont utilisées pour détecter les bords de la bande de matériau (2).

23. Procédé selon l'une des revendications 1 à 22, dans lequel la différence, entre l'épaisseur de bande ($D_0$) déterminée à l'étape c), en position longitudinale au début du cycle de manoeuvre, et de l'épaisseur de bande ($D_{ok}$) corrigée, déterminée à l'étape i) à la fin du cycle de manoeuvre, est utilisée en tant qu'indication quantitative de la précision de la correction du dernier cycle de manoeuvre.

24. Procédé selon l'une des revendications 1 à 23, dans lequel l'unité de mesure (6) est manoeuvrée pour déterminer le profil transversal en épaisseur, alternativement vers les deux côtés, transversalement par rapport à la position longitudinale (24).

25. Dispositif de mise en oeuvre d'un procédé selon l'une des revendications 1 à 24,

    - avec un boîtier (4),
    - avec au moins une source de rayonnement (8) disposée dans le boîtier (4), et
    - avec au moins deux détecteurs (10) disposés dans le boîtier (4), disposés transversalement par rapport à la direction de défilement de la bande et de façon mutuellement espacée et orientés sous des angles différents, en direction de la au moins une source de rayonnement (8), et

- la bande de matériau (2) étant disposée entre la source de rayonnement (8) et les détecteurs (10),

- les détecteurs (10) détectant par tronçons la bande de matériau (2), transversalement par rapport à sa direction de défilement de bande, et où

- des moyens de manoeuvre (13) sont prévus pour effectuer une manoeuvre synchrone de la source de rayonnement (8) et des détecteurs (10) par rapport à la bande de matériau (2).

26. Dispositif selon la revendication 25, le boîtier (4) étant conformé en C.

27. Dispositif selon la revendication 25 ou 26, la source de rayonnement (8) émettant un rayonnement électromagnétique à haute énergie, en particulier un rayonnement gamma ou un rayonnement X.

28. Procédé selon l'une des revendications 25 à 27, une pluralité de détecteurs (10a à 10g) étant prévue.

29. Dispositif selon la revendication 28, les détecteurs extérieurs (10a à 10g) étant affectés à vérifier les zones du bord extérieur de la bande de matériau (2).

30. Dispositif selon l'une des revendications 25 à 29, les détecteurs (10) étant réalisés sous la forme de chambres d'ionisation, de compteurs de scintillation, de tubes de comptage ou de détecteurs à semi-conducteur.

31. Dispositif selon l'une des revendications 25 à 30, les moyens de manoeuvre (13) permettant une détection cyclique de l'ensemble de la largeur de la bande de matériau (2).

32. Dispositif selon l'une des revendications 25 à 31, les moyens de manoeuvre (13) manoeuvrant, par rapport à la bande de matériau (2), l'unité de mesure (6), formée de la source de rayonnement (8) et des détecteurs (10).

33. Dispositif selon la revendication 32, les moyens de manoeuvre (13) manoeuvrant le boîtier (4) avec la source de rayonnement (8) et les détecteurs (10) par rapport à la bande de matériau (2).

34. Dispositif selon la revendication 32, les moyens de manoeuvre (13) manoeuvrant la source de rayonnement (8) et les détecteurs (10) par rapport au boîtier (4).

35. Dispositif selon l'une des revendications 25 à 34, les moyens de manoeuvre (13) présentant au moins un guidage linéaire (18) et un entraînement linéaire.

36. Dispositif selon l'une des revendications 25 à 35, les moyens de manoeuvre (13) présentant un dispositif de mesure pour déterminer la position de l'unité de mesure (6) par rapport à la bande de matériau (2).

37. Utilisation d'un dispositif selon l'une des revendications 25 à 36, pour la mise en oeuvre d'un procédé selon l'une des revendications 1 à 24.

Fig.1

Fig.2

Fig.3

Fig.4

Fig.5